(19) Europäisches Patentamt
European Patent Office
Office européen des brevets

(11) EP 2 628 807 A1

(12) EUROPÄISCHE PATENTANMELDUNG

(43) Veröffentlichungstag:
21.08.2013  Patentblatt 2013/34

(51) Int Cl.:
C21D 1/25 (2006.01)          C21D 6/00 (2006.01)
C21D 8/00 (2006.01)          C21D 9/00 (2006.01)
C22C 38/00 (2006.01)         F16B 31/00 (2006.01)
C21D 1/18 (2006.01)

(21) Anmeldenummer: 12155477.8

(22) Anmeldetag: 14.02.2012

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(71) Anmelder: Swiss Steel AG
6021 Emmenbrücke (CH)

(72) Erfinder: Die Erfindernennung liegt noch nicht vor

(74) Vertreter: Schmauder & Partner AG
Patent- & Markenanwälte VSP
Zwängiweg 7
8038 Zürich (CH)

(54) **Vergütetes stiftartiges Verbindungselement und Verfahren zu dessen Herstellung**

(57)    Ein vergütetes stiftartiges Verbindungselement weist einen Gewichtsanteil von
- 0.15 bis 0.25% Kohlenstoff,
- 1.20 bis 1.60% Silizium,
- 0.60 bis 1.00% Mangan,
- bis zu 1.00% Chrom,
- bis zu 1.50% Nickel,
- bis 0.50% Molybdän,
- 0.02 bis 0.04% Aluminium,
- bis zu 0.08% Titan,
- bis zu 0.02% Phosphor,
- bis zu 0.02% Schwefel,

sowie weitere stahlübliche Beimengungen und der Rest Eisen auf, wobei das Stahlgefüge zu mindestens 70% aus einem angelassenen Martensit besteht. Das Verbindungselement weist folgende Eigenschaften auf:
- Zugfestigkeit Rm ≥ 1'500 MPa,
- ISO-V-Kerbschlagzähigkeit bei -20°C ≥ 27 J.

Fig. 3

EP 2 628 807 A1

**Beschreibung**

Technisches Gebiet

Die Erfindung betrifft ein vergütetes stiftartiges Verbindungselement gemäss dem Oberbegriff des Anspruchs 1, Verfahren zu dessen Herstellung sowie die Verwendung einer Stahlzusammensetzung zur Herstellung eines stiftartigen Verbindungselementes.

Stand der Technik

Die Fertigung von vergüteten Verbindungselementen der maximalen Festigkeitsklasse 12.9. nach ISO898 ist heute Stand der Technik. Die Mehrzahl dieser hochfesten Verbindungen wird im Automobilbau eingesetzt. Die steigenden Anforderungen betreffend Energieverbrauch und $CO_2$-Ausstoss verlangen zunehmend höhere Festigkeiten, die damit eine leichtere Bauweise durch Downsizing ermöglichen.

Erste bekannte Lösungsansätze betreffen die Erhöhung des Kohlenstoffgehalts des Stahls oder den Einsatz spezieller Wärmebehandlungsverfahren.

Aus der europäischen Patentanmeldung EP 1728883 ist eine hochfeste Schraube mit einer Festigkeit von 1'200 N/mm$^2$ oder mehr bekannt. Die Schraube weist einen Kohlenstoffgehalt von mindestens 0.5 Gew-% auf. Der als Ausgangsmaterial dienende Draht wird zur Schraube umgeformt und danach bei einem Temperaturbereich von 100°C bis 500°C angelassen.

Aus der SAE-Veröffentlichung 2003-01-1179 "Development of 1'600 N/mm$^2$ class ultra-high strength bolts" ist eine hochfeste Schraube mit einer Zugfestigkeit von 1'600 N/mm$^2$ bekannt. Die Schraube wird aus einem Stahl mit einem Kohlenstoffgehalt von 0,8 bis 0,85 Gew.-%, hergestellt.

Die Patentanmeldung WO 2008/142275 beschreibt einen mit Vanadium und Niob mikrolegierten Stahl, mit dem Festigkeitswerte über 1'500 MPa erreicht werden können. Der Kohlenstoffgehalt beträgt 0.3 bis 0.5 Gew.%.

Aus dem taiwanesischen Patentdokument TW 553 786 ist eine Schraube mit einer Festigkeitsklasse 14.99 bekannt. Damit diese Festigkeitsklasse erreicht wird, muss eine wohldefinierte Temperaturführung inkl. Abkühlrate nach der Anlassbehandlung eingehalten werden.

Die Patentanmeldung DE 10 2008 041391 beschreibt eine besondere Zwischenstufenvergütung zur Herstellung von ultrahochfesten Schrauben. Der eingesetzte Stahl weist bevorzugt einen Kohlenstoffgehalt von 0.2 bis 0.4 Gew-% auf.

Hohe Kohlenstoffgehalte wirken sich nachteilig auf die Glühbehandlung, auf die erreichbare Umformbarkeit und auf die Zähigkeit des Stahls aus. Je höher der Kohlenstoffgehalt ist, umso ausgeprägter ist die Kaltverfestigung. Das Verbindungselement sollte deshalb bevorzugt aus einem Stahl mit einem Kohlenstoffgehalt von maximal 0.25 Gew.-% gefertigt werden können.

Weiter wäre es vorteilhaft, wenn bestehende Wärmebehandlungsverfahren (konventionelles Härten und Vergüten) eingesetzt werden können. Spezielle Wärmebehandlungsverfahren sind nicht nur mit zusätzlichen Kosten verbunden, z.B. Investitionen in Anlagen oder Prozesskosten. Darüber hinaus beschränken sie auch die Flexibilität eines Produktionsablaufs indem das Teil nur über einer speziellen Fertigungslinie produziert werden kann.

Es besteht deshalb Bedarf an einer werkstofftechnischen Lösung mit einem Kohlenstoffgehalt von maximal 0.25 Gew.-%, welche bei Anwendung konventioneller Vergütungsbehandlung zu höherer Festigkeit und gleichzeitig guter Zähigkeit führt.

Darstellung der Erfindung

Aufgabe der Erfindung ist es demnach, ein verbessertes vergütetes stiftartiges Verbindungselement bereitzustellen, mit dem insbesondere die obigen Nachteile vermieden werden. Gelöst werden diese Aufgaben durch das im Anspruch 1 definierte vergütete, Verbindungselement.

Die nachfolgenden Gehaltsangaben in Prozent (%) bzw. in Teilen pro Million ("parts per million, ppm") beziehen sich - sofern nicht ausdrücklich anders angegeben - auf Gewichtsanteile.

Das erfindungsgemässe vergütete stiftartige Verbindungselement weist einen Gewichtsanteil von

- 0.15 bis 0.25% Kohlenstoff,
- 1.20 bis 1.60% Silizium,
- 0.60 bis 1.00% Mangan,
- bis zu 1.00% Chrom,
- bis zu 1.50% Nickel,
- bis 0.50% Molybdän,

- 0.02 bis 0.04% Aluminium,
- bis zu 0.08% Titan,
- bis zu 0.02% Phosphor,
- bis zu 0.02% Schwefel,

sowie weitere stahlübliche Beimengungen und der Rest Eisen auf, wobei das Stahlgefüge zu mindestens 70% aus einem angelassenen Martensit besteht und folgende Eigenschaften aufweist:

- Zugfestigkeit Rm ≥ 1'500 MPa,
- ISO-V-Kerbschlagzähigkeit bei -20°C ≥ 27 J.

Ein ähnlicher Stahl wurde in der Patentanmeldung WO 2005/024072 bereits für die Herstellung von Kettengliedern mit einer Festigkeit von 1'000 MPa beschrieben. Hierbei handelt es sich allerdings um ein ganz anderes Anwendungsgebiet, bei dem die Schweisseignung und die Zähigkeit der Schweissnaht im Vordergrund stehen. Das Kettenglied erfährt weder eine hohe Umformung, noch können tiefe Anlasstemperaturen angewendet werden (in diesem Fall würde die geforderte Tieftemperaturzähigkeit nicht mehr erreicht).

Unter den veränderten Verarbeitungsbedingungen wurde jetzt überraschend gefunden, dass sich die erfindungsgemässe Stahlzusammensetzung nicht nur für die Herstellung von massivumgeformten, stiftartigen vergüteten Verbindungselementen nach ISO898 eignet, sondern dass nach dem Vergüten auch eine deutlich verbesserte Festigkeit-Zähigkeit-Kombination (im Vergleich zu WO 2005/024072) vorliegt, falls eine Anlasstemperatur im Bereich von 250 bis 380°C, vorzugsweise von 250 bis 350°C, gewählt wird.

Stiftartige Verbindungselemente können Schrauben mit aufgebrachtem Gewinde oder Bolzen ohne Gewinde sein. Die Eigenschaften von vergüteten Verbindungselementen sind in der ISO898 beschrieben. Beispiele für vergütete Verbindungselemente sind: Motorschrauben, Fahrwerksschrauben, Gewindestangen, Radbolzen. Generell weisen die stiftartigen Verbindungselemente einen Achsenteil sowie einen daran anschliessenden endständigen Kopfteil auf, wobei Kopfteil und Achsenteil einstückig ausgebildet sind. Damit der massivumgeformte Kopfteil während der Umformung nicht aufplatzt, muss der Werkstoff einen hohen Umformgrad $\varphi$ aufweisen. Es konnte überraschend nachgewiesen werden, dass die erfindungsgemässe Stahlzusammensetzung im geglühten Zustand trotz der hohen Endfestigkeit (nach dem Vergüten) ohne Schwierigkeiten mit einem $\varphi = 1.20$ umgeformt werden konnte.

Die adäquate Stahlzusammensetzung ergibt sich wie folgt:

Durch die untere Begrenzung des Kohlenstoffgehalts auf 0.15 Gew.-% wird sichergestellt, dass eine ausreichende Festigkeit im vergüteten Zustand erreicht wird.

Durch die obere Begrenzung des Kohlenstoffs auf 0.25 Gew.-% wird sichergestellt, dass der Stahl im geglühten Zustand gut kaltumgeformt werden kann.

Der erhöhte Siliziumgehalt von mindestens 1.20 Gew.-% bewirkt eine Verzögerung der beim Anlassen ablaufenden Vorgänge (Kohlenstoffdiffusion) und damit auch eine Verschiebung der Martensitversprödung zu höheren Temperaturen.

Da Silizium zur Mischkristallverfestigung führt, wird die Zugabe auf 1.60 Gew.-% begrenzt. Dies stellt sicher, dass der Stahl im geglühten Zustand noch gut kaltumgeformt werden kann.

Mangan bestimmt in Kombination mit Chrom die Durchhärtung des Stahls im Härteprozess. Eine minimale Zugabe von 0.60% Gew.-% ist notwendig, um eine Wirkung zu erzeugen. Da ein zu hoher Mangangehalt bei der Stahlherstellung zu Entmischungen führt (sog. Seigerungszonen) wird sein Gehalt auf 1.00 Gew.-% begrenzt.

Für "grosse" Wandstärken reicht ein Mangangehalt von 1.00 Gew.-% nicht aus, um eine Durchhärtung des Bauteils zu gewährleisten. In diesem Fall wird zusätzlich Chrom zugegeben. Wie Mangan neigt auch Chrom zur Bildung von Seigerungszonen, so dass sein Gehalt ebenfalls auf 1.00 Gew.-% begrenzt wird.

Molybdän soll die Ausscheidung von Eisenkarbiden an den Primärkorngrenzen während der Anlassbehandlung und einen damit verbundenen Zähigkeitsverlust verhindern. Aus Kostengründen ist der Molybdängehalt so niedrig wie notwendig zu wählen. Eine Zugabe von maximal 0.5-Gew.% Molybdän ist hierfür ausreichend.

Nickel verbessert die Charpy-Kerbschlagzähigkeit bei tiefen Temperaturen Aus Kostengründen wird der Nickelgehalt auf 1.50 Gew.-% begrenzt. Falls keine Anforderung an die Kaltzähigkeit gestellt wird, ist eine Zugabe von Nickel nicht erforderlich.

Die Austenitkornstabilität während des Härtens wird über eine Aluminiumzugabe und die Bildung von Aluminiumnitride gewährleistet. Aluminiumgehalte von 0.02 bis 0.04 Gew.% sind üblich.

Darüber hinaus kann die Austenitkornstabilität durch die Zugabe von Titan und die Bildung von Titankarbonitriden weiter verbessert werden. In diesem Fall reichen Titangehalte unter 0.08 Gew.-% aus, um den gewünschten Effekt zu erhalten.

Phosphor ist ein Stahlschädling. Es geht an die Austenitkorngrenzen und schwächt das Gefüge. Aus diesem Grund wird der Phosphorgehalt auf 0.02 Gew.-% begrenzt.

Schwefel bildet während der Stahlherstellung und -weiterverarbeitung langgestreckte Mangansulfide. Die Querzähigkeit verschlechtert sich dadurch. Aus diesem Grund wird der Schwefelgehalt auf 0.02 Gew.-% begrenzt.

Gemäss einem Aspekt der Erfindung umfasst ein Verfahren zur Herstellung des erfindungsgemässen stiftartigen Verbindungselementes die folgenden Verfahrensschritte:

a) Warmwalzen von Walzdraht oder Stabstahl;
b) Weichglühen bei 670 bis 730°C;
c) Kaltfliesspressen auf eine gewünschte Endform des Verbindungselementes: Rohling abscheren, vorformen, fertigstauchen, abgraten und ggfs. Gewindeteil reduzieren;
d) Austenitisieren bei 840 bis 900°C;
e) Abschrecken im Wasser(bzw. wässrige Polymerlösung)- oder Oelbad;
f) Anlassen bei 250 bis 380°C für mindestens eine Stunde.

Gemäss einem weiteren Aspekt der Erfindung umfasst ein Verfahren zur Herstellung des erfindungsgemässen stiftartigen Verbindungselementes die folgenden Verfahrensschritte:

a) Warmwalzen von Stabstahl
b) Weichglühen bei 670 bis 730°C
c) Schmieden: Ablängen des Stabs, Aufwärmen zumindest eines zu bearbeitenden Abschnittes auf Schmiedetemperatur und Vorformen in einem Presswerkzeug, d.h. die Abschnitte werden ganz oder partiell auf Schmiedetemperatur (abhängig vom Werkstoff bis zu 1.250 °C) erwärmt und in Pressen vorgeformt;
d) Austenitisieren bei 840 bis 900°C;
e) Abschrecken im Wasser(bzw. wässrige Polymerlösung)- oder Oelbad;
f) Anlassen bei 250 bis 380°C für mindestens eine Stunde;
g) anschliessende Nachbearbeitung des so erhaltenen Rohlings auf eine gewünschte Endform des Verbindungselementes; zur Fertigstellung solcher Verbindungselemente werden zerspanende Verfahren (CNC-Drehen, Gewindeschneiden) angewandt oder in einem höherwertigen Verfahren die Gewinde spanlos auf Gewinderollmaschinen hergestellt.

Bevorzugte Ausgestaltungen sind in den abhängigen Ansprüchen definiert.
Bei einer vorteilhaften Ausführungsform des Herstellungsverfahrens wird das Anlassen für mindestens eine Stunde bei 250 bis 350°C durchgeführt.
Vorteilhafterweise wird lokal, d.h. in gewissen Bereichen des stiftartigen Verbindungselementes, der plastische Umformgrad $\varphi$ von 0.6 überschritten. In gewissen Ausführungsformen werden noch höhere Umformgrade, beispielsweise bis zu $\varphi = 1.2$ gewählt.
Bei einer vorteilhaften Ausgestaltung zeichnet sich das Verbindungselement durch eine Zugfestigkeit Rm $\geq$ 1'550 MPa aus.
Dabei kann das Verbindungselement insbesondere als Schraube oder als Bolzen ausgestaltet sein.

<u>Wege zur Ausführung der Erfindung</u>

Bei der Herstellung von stiftartigen Verbindungselementen kommen typischerweise folgende Verfahrensschritte zur Anwendung: Warmwalzen von Draht oder Stab als Rohmaterial, Glühen des Drahts zur Einstellung von kugeligem Zementit bzw. Glühung des Stabs zur Gewährleistung der Kaltscherbarkeit, Massivumformung (Kaltfliesspressen des Drahts, Schmieden des Stabs), Vergütungsbehandlung (Härten und Anlassen) zur Einstellung der mechanischtechnologischen Eigenschaften.
Damit die für die späteren Fertigungsschritte (Kaltfliesspressen, Kaltscheren oder Schmieden) benötigte Kraft und damit der Werkzeugverschleiss niedrig bleiben, soll der verwendete Stahl möglichst wenig Kohlenstoff enthalten und dieser soll möglichst als kugeliger Zementit vorliegen, was durch eine vorgängige Glühung (bei 670 bis 730°C) des Rohmaterials erreicht wird (sog. Weichglühung). Die optimale Glühdauer kann zwischen 5 und 20 Stunden variieren und hängt von der gewünschten Perliteinformung bzw. von der gewünschten Härte ab.
Die Wahl des formgebenden Verfahrens hängt von der Dimension des stiftartigen Verbindungselements und von seiner Stückzahl ab:

- Das <u>Kaltfliesspressverfahren</u> auf mehrstufigen Pressen für grosse Stückzahlen und Durchmesser bis zurzeit maximal M 36. Das Ausgangsmaterial wird als Draht angeliefert und in den Pressen vorgeschalteten Anlagen abgehaspelt, gerichtet und gegebenenfalls auf den gewünschten Durchmesser reduziert. Moderne Kaltfliesspressen arbeiten mehrstufig, d. h. pro Hub sind mehrere Operationen hintereinander verkettet, bspw. Rohling abscheren, Sechskantkopf vorformen, fertigstauchen, abgraten und Gewindeteil reduzieren.
- Das Warmpressverfahren <u>Schmieden</u> auf Schmiedepressen für kleine bis mittlere Stückzahlen und Durchmesser bis M 60. Als Ausgangsmaterial werden Stangen verwendet, die im ersten Arbeitsschritt abgelängt werden. Die Abschnitte werden dann ganz oder partiell auf Schmiedetemperatur (abhängig vom Werkstoff bis zu 1.250 °C) erwärmt und in Pressen vorgeformt. Zur Fertigstellung solcher Verbindungselemente werden anschliessend zerspanende Verfahren (CNC-Drehen, Gewindeschneiden) angewandt, oder in einem höherwertigen Verfahren die Gewinde spanlos auf Gewinderollmaschinen hergestellt.

Die Temperaturen und Zeiten der anschliessenden Härte- und Anlassbehandlungen hängen vom gewählten Verfahren (z.B. Abschreckung im Wasserbad oder im Oelbad) und von der genauen Stahlzusammensetzung ab.

Ein Ausführungsbeispiel der Erfindung wird nachfolgend anhand der Zeichnungen näher beschrieben, dabei zeigen für einen Stahl mit der in Tabelle 1 angegebenen Zusammensetzung:

Fig. 1 die Zugfestigkeit Rm (in MPa) und die Brucheinschnürung (in %) von vier Stahlproben (Proben 1, 2, 3, 4) nach unterschiedlich durchgeführter Weichglühung;

Fig. 2 eine Veranschaulichung der Kaltumformbarkeit nach Weichglühung, mit fotografischen Aufnahmen der Probe 3 in unverformtem Zustand (ganz links) sowie mit zunehmender Stauchung;

Fig. 3 das Anlassverhalten nach einer 30 minütigen Reaustenitisierung bei 880°C mit anschliessendem Abschrecken im Wasserbad;

Fig. 4 Kerbschlagarbeit in Abhängigkeit der Prüftemperatur.

Die folgende Tabelle 1 zeigt die chemische Zusammensetzung eines erfindungsgemässen Stahls (in Gew.-%):

**Tabelle 1**

| C | Si | Mn | Cr | Mo | Ni | Al | Ti | P | S |
|---|----|----|----|----|----|----|----|----|----|
| 0.23 | 1.47 | 0.70 | 0.58 | 0.32 | 1.16 | 0.03 | 0.05 | 0.01 | 0.002 |

Aus diesem Stahl wurde ein warmgewalzter Draht mit 11 mm Durchmesser gefertigt. Der Draht weist im warmgewalzten Zustand folgende Eigenschaften auf:

Dehngrenze Rp0.2 = 929 MPa
Zugfestigkeit Rm = 1'180 MPa
Bruchdehnung A5 = 18%
Brucheinschnürung Z = 54%

Zur Optimierung der Kaltumformbarkeit wurden verschiedene Glühversuche durchgeführt. Die Glühparameter sind in der nachfolgenden Tabelle 2 zusammengefasst:

**Tabelle 2**

| Probe | Glühtemperatur | Haltezeit | Abkühlung bis 600°C | Abkühlung bis 550°C | im Ofen bis RT | an Luft bis RT |
|-------|----------------|-----------|---------------------|---------------------|----------------|----------------|
| 1 | 710°C | 15h | 9h | | X | |
| 2 | 710°C | 15h | 9h | | | X |
| 3 | 710°C | 15h | | 13h | X | |
| 4 | 710°C | 15h | | 13h | | X |

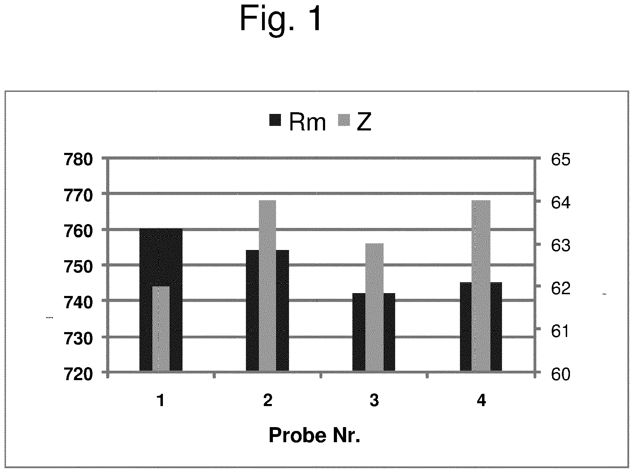

Die erreichten Werte der Zugfestigkeit Rm und der Brucheinschnürung Z sind in Fig. 1 dargestellt.

Die Kaltumformbarkeit wurde in Stauchversuchen an Probe 3 überprüft, wobei die Probe bis zu einem Umformgrad $\varphi$ von 1.2, entsprechend einer Stauchung auf 30% der ursprünglichen Länge, verformt wurde. Dabei gelten die Beziehungen:

$$\varepsilon = ( h_0-h_1)/h_0, \qquad und \qquad \varphi = \ln (h_1/h_0)$$

mit $h_0$= Anfangshöhe, h1= Endhöhe.

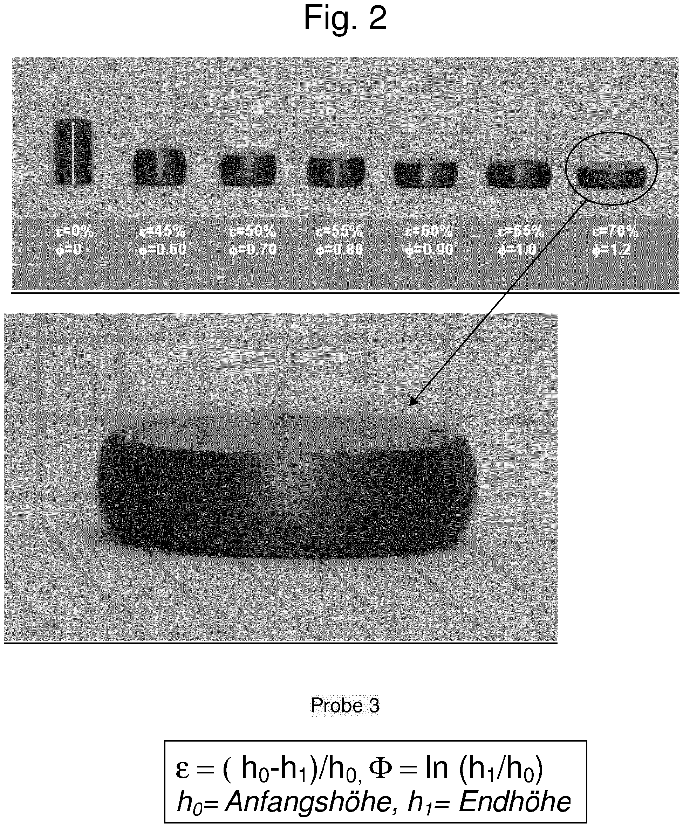

Auch bei einem ungewohnt hohen Umformgrad $\varphi$ von 1.2 sind keine Oberflächenanrisse an der Stauchprobe zu sehen (Fig. 2).

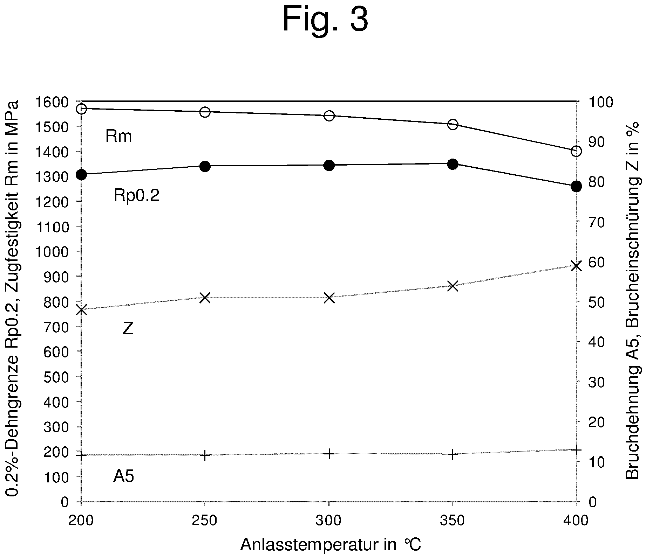

Zur Charakterisierung der Vergütungseigenschaften des Stahls wurden verschiedene Versuche mit Abschreckung im Wasser- oder im Oelbad durchgeführt. Fig. 3 zeigt beispielhaft das Anlassverhalten nach einer 30 minütigen Reaustenitisierung bei 880°C mit anschliessendem Abschrecken im Wasserbad.

Beim Anlassen zwischen 250 und 350°C bleibt die Zugfestigkeit Rm über 1'500 MPa während die Bruchdehnung A5 bereits über 10% und die Brucheinschnürung über 50% beträgt.

Die Kerbschlagzähigkeit konnte an der kleinen Dimension nicht bestimmt werden. Aus diesem Grund wurde eine weitere Walzung in 19 mm Draht durchgeführt. Im Zugversuch wurden nach dem Anlassen zwischen 300 und 380°C die in der folgenden Tabelle 3 angegebenen Werte erhalten:

## Tabelle 3

| Anlasstemp. | Rp0.2 | Rm | A5 | Z |
|---|---|---|---|---|
| °C | MPa | MPa | % | % |
| 380 | 1'287 | 1'506 | 10.7 | 53.7 |
| 350 | 1'249 | 1'510 | 10.5 | 47.8 |
| 300 | 1'304 | 1'574 | 11.3 | 51.9 |

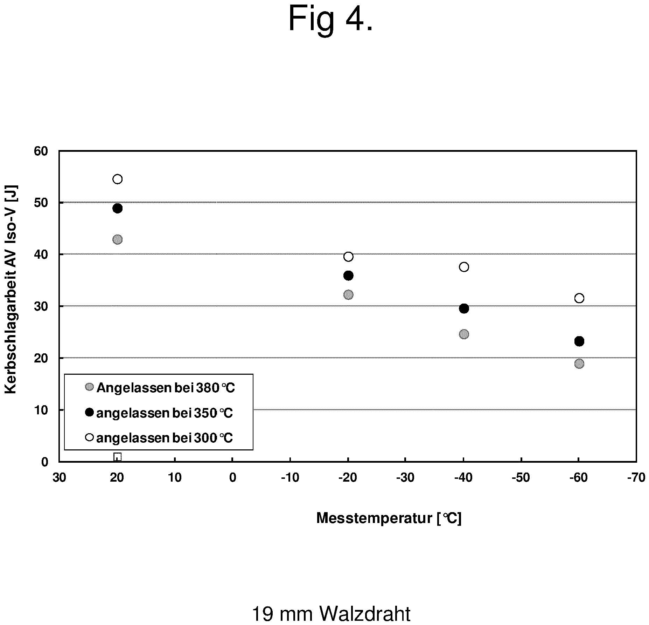

Die Fig. 4 zeigt, dass die Charpy-Kerbschlagarbeit ISO-V bei Raumtemperatur in allen drei Fällen über 40 J liegt. Bei -20°C wird immer noch eine Charpy-Kerbschlagarbeit ISO-V von mindestens 30 J erreicht.

**Patentansprüche**

1. Vergütetes stiftartiges Verbindungselement, **gekennzeichnet durch** einen Gewichtsanteil von

   - 0.15 bis 0.25% Kohlenstoff,
   - 1.20 bis 1.60% Silizium,
   - 0.60 bis 1.00% Mangan,
   - bis zu 1.00% Chrom,
   - bis zu 1.50% Nickel,
   - bis 0.50% Molybdän,
   - 0.02 bis 0.04% Aluminium,
   - bis zu 0.08% Titan,
   - bis zu 0.02% Phosphor,
   - bis zu 0.02% Schwefel,

   sowie weiteren stahlübliche Beimengungen und der Rest Eisen, wobei das Stahlgefüge zu mindestens 70% aus einem angelassenen Martensit besteht und folgende Eigenschaften aufweist:

   Zugfestigkeit Rm $\geq$ 1'500 MPa,
   ISO-V-Kerbschlagzähigkeit bei -20°C $\geq$ 27 J.

2. Verbindungselement nach Anspruch 1, **gekennzeichnet durch** eine Zugfestigkeit Rm $\geq$ 1'550 MPa.

3. Verbindungselement nach Anspruch 1 oder 2, ausgestaltet als Schraube oder als Bolzen.

4. Verfahren zur Herstellung eines Verbindungselementes nach einem der Ansprüche 1 bis 3, die folgenden Verfahrensschritte umfassend:

a) Warmwalzen von Walzdraht oder Stabstahl;

b) Weichglühen bei 670 bis 730°C;

c) Kaltfliesspressen auf eine gewünschte Endform des Verbindungselementes;

d) Austenitisieren bei 840 bis 900°C;

e) Abschrecken;

f) Anlassen bei 250 bis 380°C für mindestens eine Stunde.

5. Verfahren zur Herstellung eines Verbindungselementes nach einem der Ansprüche 1 bis 3, die folgenden Verfahrensschritte umfassend:

a) Warmwalzen von Stabstahl;

b) Weichglühen bei 670 bis 730°C;

c) Ablängen des Stabs, Aufwärmen zumindest eines zu bearbeitenden Abschnittes auf Schmiedetemperatur und Vorformen in einem Presswerkzeug;

d) Austenitisieren bei 840 bis 900°C;

e) Abschrecken;

f) Anlassen bei 250 bis 380°C für mindestens eine Stunde;

g) anschliessende Nachbearbeitung des so erhaltenen Rohlings auf eine gewünschte Endform des Verbindungselementes.

6. Verfahren zur Herstellung eines Verbindungselementes nach einem der Ansprüche 4 bis 5, wobei das Anlassen für mindestens eine Stunde bei 250 bis 350°C stattfindet.

7. Verfahren zur Herstellung eines Verbindungselementes nach einem der Ansprüche 4 bis 6, wobei der plastische Umformgrad $\varphi$ von 0.6 lokal überschritten wird.

8. Verwendung eines Stahls mit einem Gewichtsanteil von

- 0.15 bis 0.25% Kohlenstoff,

- 1.20 bis 1.60% Silizium,

- 0.60 bis 1.00% Mangan,

- bis zu 1.00% Chrom,

- bis zu 1.50% Nickel,

- bis 0.50% Molybdän,

- 0.02 bis 0.04% Aluminium,

- bis zu 0.08% Titan,

- bis zu 0.02% Phosphor,

- bis zu 0.02% Schwefel,

sowie weiteren stahlübliche Beimengungen und der Rest Eisen, zur Herstellung eines stiftartigen Verbindungselementes.

# Fig. 1

# Fig. 2

ε=0%  ε=45%  ε=50%  ε=55%  ε=60%  ε=65%  ε=70%
φ=0   φ=0.60  φ=0.70  φ=0.80  φ=0.90  φ=1.0  φ=1.2

Probe 3

$$\varepsilon = (h_0 - h_1)/h_0, \quad \Phi = \ln(h_1/h_0)$$
$$h_0 = \textit{Anfangshöhe}, \quad h_1 = \textit{Endhöhe}$$

# Fig. 3

# Fig 4.

19 mm Walzdraht

Europäisches
Patentamt

European
Patent Office

Office européen
des brevets

**EUROPÄISCHER RECHERCHENBERICHT**

Nummer der Anmeldung

EP 12 15 5477

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 9 263876 A (NIPPON STEEL CORP) 7. Oktober 1997 (1997-10-07) * Zusammenfassung * * Tabellen 1,2 * * Beispiele B,2 * ----- | 1-8 | INV. C21D1/25 C21D6/00 C21D8/00 C21D9/00 C22C38/00 |
| X | JP 6 271975 A (KOBE STEEL LTD) 27. September 1994 (1994-09-27) * Zusammenfassung * * Tabellen 1,2 * ----- | 1-8 | F16B31/00 C21D1/18 |
| A | EP 1 686 194 A1 (KOBE STEEL LTD [JP]; SHINSHU TLO CO LTD [JP]) 2. August 2006 (2006-08-02) * Absatz [0060]; Tabellen 1,2 * * Absatz [0008] - Absatz [0009]; Anspruch 2 * ----- | 1-8 | |

| | |
|---|---|
| | RECHERCHIERTE SACHGEBIETE (IPC) |
| | C21D C22C F16B |

Der vorliegende Recherchenbericht wurde für alle Patentansprüche erstellt

| Recherchenort | Abschlußdatum der Recherche | Prüfer |
|---|---|---|
| Den Haag | 27. Juni 2012 | Ugarte, Eva |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**EP 2 628 807 A1**

| Im Recherchenbericht angeführtes Patentdokument | | Datum der Veröffentlichung | Mitglied(er) der Patentfamilie | | Datum der Veröffentlichung |
|---|---|---|---|---|---|
| JP 9263876 | A | 07-10-1997 | JP | 3494799 B2 | 09-02-2004 |
| | | | JP | 9263876 A | 07-10-1997 |
| JP 6271975 | A | 27-09-1994 | KEINE | | |
| EP 1686194 | A1 | 02-08-2006 | EP | 1686194 A1 | 02-08-2006 |
| | | | JP | 2006233326 A | 07-09-2006 |
| | | | KR | 20060087437 A | 02-08-2006 |
| | | | US | 2006169366 A1 | 03-08-2006 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1728883 A
- WO 2008142275 A
- TW 553786
- DE 102008041391
- WO 2005024072 A